# EUROPEAN PATENT SPECIFICATION

(11) **EP 3 814 394 B1**
(45) Date of publication and mention of the grant of the patent: **14.06.2023**
(21) Application number: 19826789.0
(22) Date of filing: 28.06.2019
(51) Int. Cl.: C08G 18/00, C08J 3/18, C08K 5/101, C08K 5/103, C09J 11/06

(54) **IMPROVED REACTIVE POLYURETHANE SYSTEMS**
VERBESSERTE REAKTIVE POLYURETHANSYSTEME
SYSTÈMES AMÉLIORÉS DE POLYURÉTHANE RÉACTIF

(30) Priority: 28.06.2018 US 201862691249 P
(43) Date of publication of application: 05.05.2021
(73) Proprietor: Emerald Kalama Chemical, LLC, Vancouver, WA 98683 (US)
(72) Inventor: MCBRIDE, Emily, Kalama, Washington 98625 (US); VAUGHN-BIEGE, Julie O., Copley, Ohio 44321 (US); BUTT, Jason R., Tinley Park, Illinois 60487 (US); POSSELT, Kyle Jeffrey, Woodland, Washington 98674 (US); ARENDT, William, Libertyville, Illinois 60048 (US)
(74) Representative: Uehlin, Lars
(86) International application number: PCT/US2019/039918
(87) International publication number: WO 2020/006473

(56) References cited:
- WO-A1-93/03090
- US-A1- 2004 014 830
- US-B2- 7 812 080
- US-B2- 9 758 637

## Description

### FIELD OF THE INVENTION

This invention is directed to reactive polyurethane formulations comprising a plasticizer that achieves improved or comparable compatibility, processability, color and optical clarity over a range of other commonly used plasticizers in these systems. In particular, this invention is directed to use of a certain dibenzoate plasticizer having lower hydroxyl numbers as compared to traditional plasticizers used in reactive thermoplastic polyurethane and thermosetting polyurethane systems.

### BACKGROUND OF THE INVENTION

Polyurethanes are organic polymers that contain a urethane group in the structure. Typically, polyurethane compositions are produced by the reaction of isocyanates (-NCO group) with polyols (alcohols having a number of -OH groups, of two or more). In preparing polyurethanes, an excess of isocyanate is sometimes used, resulting in a polyurethane having reactive isocyanate groups. As such, polyurethanes may also contain urea groups resulting from the reaction of the excess isocyanate groups with amines and water. Because of the variety of raw materials that can be utilized to form polyurethanes, they are well suited, and may be tailored for, specific individual applications. As such, polyurethanes are well known as highly versatile polymer compositions that are useful in many applications.

Polyurethanes may be thermoplastic or thermosetting. Thermoplastic polyurethanes (TPU's) are a class of polyurethane elastomers that are fully thermoplastic. They are elastic and melt-processable. TPU structure results in unique properties that offers flexibility in use and enables TPU's to be used as both a hard rubber and a soft engineering thermoplastic. TPU's are soft when heated and harden when they are cooled and may be reprocessed without losing structural integrity. TPU's are used on their own as plastics and as replacements for rubber additives in other polymeric compositions. TPU's can be used in a wide range of processing technologies, including without limitation, injection, blow and compression molding, extrusion, calendaring, casting, laminating and compounding, among others. They may be sterilized, welded, colored, painted, printed, die-cut and slitted.

TPU's are known for strength, elasticity, and ability to resist oil, grease, solvents, chemicals and abrasion. Properties of TPU's may be adjusted by including other additives in the formulation. TPU's exhibit low temperature flexibility and, depending on grade, may exhibit biocompatibility, hydrolytic stability, optical clarity, flame retardant and anti-static properties.

By contrast, thermosetting polyurethanes cannot be melted and reformed and are generally stronger and more durable than TPU's. Thermosetting polyurethanes may be formulated, applied and processed in a variety of ways to create properties that cannot be achieved with TPU's. Thermoset polyurethanes are irreversibly cured into an insoluble polymer network. Applications for thermosets include protective coating, seamless flooring, engineering compounds, mortars, adhesives, sealants, castings, potting, electrical insulation, encapsulation, solid foams, laminates, and the like. Specific methods of molding thermosets include reactive injection molding, extrusion molding, compression molding, and spin casting.

Both thermoplastic and thermosetting polyurethanes may be used in reactive polyurethane systems. A "reactive" polyurethane system, as used in this invention, means a system where additive components are included or blended in the polymer formation steps at the same time or very close to the point where the isocyanate and polyol components react, as opposed to adding them when the polyurethane polymer is fully formed.

As discussed above, both thermoplastic and thermosetting polyurethanes are plastic compounds that are created by a reaction between an isocyanate and one or more polyols. TPU's are linear block co-polymers composed of hard and soft segments and are available in different chemistries, as are thermosetting polyurethanes. Depending on the application and properties to be achieved, the chemistry of each segment may be varied by changing the type or amount of the basic components of the production: isocyanates and/or polyols. The proportion of hard and soft segments may be manipulated to produce a wide range of hardness. Generally, the greater the ratio of hard to soft segments, the more rigid the polyurethane. Polyurethane systems may also contain plasticizers to improve properties of the formulation and final products.

There are many plasticizing agents known in the art for use in polyurethane compositions. A plasticizer, by its nature, will soften a polymeric composition. In a polyurethane compound, a plasticizer can reduce hardness resulting in lower tensile strength, lower modulus values, decreased tear strengths and improved elongation. Selective plasticizer addition allows for a variety of applications for a single polyurethane composition.

A plasticizer selected for use in polyurethane formulations must be compatible with the polyurethane and must remain within the product and not lost via volatility during processing or through exudation or migration. Ideally, the mechanical properties of polyurethanes, such as abrasion resistance and elastomeric properties, among others, should not be negatively altered by use of a plasticizer, although typically softening may result in less abrasion resistance. In addition, a plasticizer selected for use must not contribute to yellowing of polyurethane products due to heat exposure or UV degradation. A variety of polyurethane plasticizers are available, including without limitation TPU and SG (sensitive grade) plasticizers.

A number of compatible plasticizer chemistries for use in polyurethanes exist in the art. Traditional plasticizers for use in polyurethanes include phthalates, phosphoric esters, alkyl sulfonic esters of phenol, and benzoates. Of the benzoates, dipropylene glycol dibenzoate (DPGDB) has long been preferred in the industry although a number of other dibenzoates have been available for many, many years. These traditional plasticizers are not without disadvantages. For example, certain phthalates have now come under regulatory scrutiny. Depending on application, these traditional plasticizers may not achieve the required softness, or they may volatilize during processing and/or exude or migrate in the final product. Fogging and discolorations have also been problematic. Hence, there has been an effort to identify plasticizers for use in polyurethane compositions that offer comparable or improved performance and compatibility while avoiding issues encountered with traditional plasticizers, such as discoloration and exudation.

U.S. Patent Nos. 6,652,774; 6,740,254; and 6,811,722 disclose use of mixed esters of glycerol as phthalate free plasticizers for use in resinous polymers, including polyurethanes, among others.

U.S. Patent No. 8,034,873 discloses an *in-situ* process for preparing a TPU composition having improved cold temperature processing, using phthalate plasticizers, aliphatic ester-based plasticizers, trimellitate-based plasticizers, phosphate-based plasticizers, epoxy-based plasticizers, and polyester-based polymer plasticizers. Specifically preferred are butyl benzyl phthalate and di-isononyl-cyclohexane dicarboxylate as plasticizers.

U.S. Patent No. 9,181,382 discloses use of a glycerol esterified with at least one aliphatic carboxylic acid as a plasticizer in a thermoplastic polyurethane.

U.S. Patent No. 9,890,243 discloses use of a polymeric plasticizer made from an aromatic acid, a glycol and a C4-C36 monocarboxylic acid or ester or anhydride in TPU compositions.

U.S. Publ. No. 20070049685 is directed to a TPU plasticized with trimethylolalkane ester plasticizers, using both aliphatic and aromatic acids. The plasticizers must have a hydroxyl number of less than 1 and have a certain viscosity for efficacy. They are stated to achieve a softer TPU with less plasticizer migration than what is found with traditional use of dipropylene glycol dibenzoate.

U.S. Publ. No. 2009/0176917 discloses a polytetrahydrofuran-ester plasticizer that is stated to be easy to incorporate, does not degrade, does not exude, and is not lost by evaporation, while at the same time improving properties of the TPU, such as processability, heat resistance, and UV resistance.

DE 10248878 discloses polyester plasticizers for use in thermoplastic polyurethanes, among other plastics.

EP Application 3 099 725 discloses a mixture of at least one carbodiimide with at least one ester selected from citric acid esters, phthalates, benzoates, adipates, phosphoric acid esters, and hydrogenated phthalic acid esters for use as a plasticizer in TPU compositions.

EP Application No. 3 037 465 discloses a thermoplastic polyurethane comprising a vulcanized vegetable oil in combination with a plasticizer that is epoxidized soybean oil, acetic esters of monoglycerides, glycerol tripropionate (GTP) isosorbide diesters and mixtures thereof.

There remains a continuing need for plasticizers that achieve comparable properties but avoid problems associated with more traditional plasticizers when used in certain TPU applications. Ideally, such plasticizers should be capable of being substituted easily in applications where traditional TPU and SG grades of plasticizers are required.

It has been discovered that a special grade of 1,2-propylene glycol dibenzoate (PGDB), a dibenzoate not heretofore utilized in polyurethane applications, achieves improved properties when compared with traditional plasticizers used in polyurethane formulations, both thermoplastic and thermosetting, including without limitation compatibility, color, exudation, optical properties and moisture vapor transmission rate (MVTR), regardless of the method of processing into a final end product. The PGDB of the invention also provides improved compatibility, hardness, tensile strength, modulus (100% and 300%), rebound, compression set, and tear strength, when compared to that achieved with tradition polyurethane plasticizers.

Some specific uses for the inventive PGDB include but are not limited to reactive thermoplastic polyurethanes, polyurethane adhesives or sealants, including 1K (one component) or 2K (two-component) adhesives or sealants, or cast polyurethane articles. A variety of end uses for the reactive polyurethane systems of the invention are discussed herein and will be evident to one skilled in the art. Any of the traditional applications for polyurethane formulations are within the scope of the invention. It is contemplated that this special grade of PGDB may be used in the reactive polyurethane systems according to the invention, regardless of the end use.

This special grade of PGDB has been shown to provide enhanced performance, even when compared with TPU and SG grades of plasticizers, although the mechanism is not fully understood. As with most polyurethane grade plasticizers, the PGDB useful in the invention has low acidity (<0.1 %) and water content levels (<0.1%, usually <0.07%). It also has a lower hydroxyl content than currently available benzoate plasticizers used in polyurethane systems. Traditional TPU and SG grades of dibenzoates - specifically of dipropylene glycol dibenzoate, which is the sole commercial grade in the market-have reported hydroxyl levels of about 4 - 6 OH. The inventive PGDB is also characterized by a very low half-ester content, less than 1%.

It is an object of the invention to provide an alternative plasticizer for use in a reactive polyurethane formulation, which achieves comparable or improved compatibility, color, exudation, optical properties, MVTR, hardness, tensile strength, tear strength, modulus, rebound, compression, and solvent swell, as compared to traditional plasticizers, including benzoate esters, used in polyurethane formulations, wherein the plasticizer comprises a low hydroxyl dibenzoate plasticizer.

It is another object of the invention to provide a reactive polyurethane formulation comprising a low hydroxyl non-phthalate plasticizer for property modifications, wherein the hydroxyl number is lower than that of currently available and utilized plasticizers in polyurethane systems, including other benzoate esters.

It is yet another object of the invention to provide a method to improve on yellowing, among other properties, encountered with the use of traditional plasticizers used in polyurethane formulations.

Still another object of the invention is to provide a low hydroxyl plasticizer for use in polyurethane, which may be substituted for traditional polyurethane TPU plasticizers known in the art.

Other objects of the invention will be apparent to one skilled in the art.

### SUMMARY OF THE INVENTION

This invention is directed to reactive polyurethane systems comprising an isocyanate and polyol in combination with a non-phthalate plasticizer. In particular, the present invention is directed to improved polyurethane formulations wherein 1,2-propylene glycol dibenzoate (plasticizer) is added at or near the time at which the isocyanate and polyol are mixed to react and form the resulting polyurethane polymer and not after the polyurethane polymer is formed. The invention is directed to use of a special grade of a low hydroxyl dibenzoate plasticizer that is 1,2-propylene glycol dibenzoate (PGDB), having a lower hydroxyl content than dibenzoate plasticizers currently used in polyurethane systems. The inventive PGDB also has a lower half-ester content than typical dibenzoate plasticizers used in polyurethane systems.

In one embodiment, the invention is a reactive polyurethane system comprising the inventive PGDB as a plasticizer.

In another embodiment, the invention is a polyurethane based adhesive or sealant comprising PGDB as a plasticizer.

In yet another embodiment, the invention is an article or part made by utilizing the thermoset or thermoplastic polyurethane comprising PGDB.

The PGDB plasticizer is characterized by low hydroxyl content as compared to traditional dibenzoate plasticizers, specifically DPGDB, used in polyurethane formulations currently and in the past.

Potential applications of the reactive formulations of the invention include luxury footwear and luxury accessories, reactive floor adhesives and construction sealants, and casted parts such as wheels, rollers, and conveyor belts, among others. Other applications will be evident to one skilled in the art. It is expected that the improved reactive polyurethane formulations of the invention may be used in any applications where polyurethanes are suitable.

### BRIEF DESCRIPTION OF THE DRAWINGS

FIG. 1(a) shows Pot Life @ 90°C results for TPU samples utilizing different plasticizers evaluated against an unplasticized control.
FIG. 1(b) shows Pot Life @ 150°C results for TPU examples utilizing different plasticizers against an unplasticized control.
FIG. 2(a) and FIG. 2(b) show initial and 10 second hardness, respectively, achieved for TPU samples utilizing different plasticizers evaluated against an unplasticized control.
FIG. 2(c) and FIG. 2(d) show initial and 10 second hardness at 7 days achieved for TPU samples utilizing different plasticizers evaluated against an unplasticized control.
FIG. 3(a) and FIG. 3(b) shows yellowing of TPU samples utilizing different plasticizers evaluated against an unplasticized control.
FIG. 4(a) and FIG. 4(b) shows tensile strength (@ 600% Nominal Strain) achieved for TPU samples utilizing different plasticizers evaluated against an unplasticized control.
FIG. 5(a) and FIG. 5(b) shows 100% modulus achieved for TPU samples utilizing different plasticizers evaluated against an unplasticized control.
FIG. 5(c) shows 300% Modulus achieved for TPU samples utilizing different plasticizers evaluated against an unplasticized control.
FIG. 6 shows roll test results achieved for TPU samples utilizing different plasticizers evaluated against an unplasticized control.
FIG. 7 shows roll test results achieved for TPU samples utilizing different plasticizers evaluated against an unplasticized control.
FIG. 8 shows rebound results achieved for TPU samples utilizing different plasticizers evaluated against an unplasticized control.
FIG. 9 shows 22 hour compression set test results achieved for TPU samples utilizing different plasticizers evaluated against an unplasticized control.
FIG. 10 shows 70 hour compression set test results achieved for TPU samples utilizing different plasticizers evaluated against an unplasticized control.
FIG. 11 shows tear strength results achieved for TPU samples utilizing different plasticizers evaluated against an unplasticized control.
FIG. 12 shows results achieved in the Solvent-Swell Water test for TPU samples utilizing different plasticizers evaluated against an unplasticized control.
FIG. 13 shows results achieved in the Solvent-Swell-ASTM Oil #1 test for TPU samples utilizing different plasticizers evaluated against an unplasticized control.
FIG. 14 shows results achieved in the Solvent-Swell-IPA test for TPU samples utilizing different plasticizers evaluated against an unplasticized control.
FIG. 15 shows results achieved in the Solvent-Swell Toluene test for TPU samples utilizing different plasticizers evaluated against an unplasticized control.

### DETAILED DESCRIPTION OF THE INVENTION

The invention is directed to reactive polyurethane formulations/systems comprising a special grade of a dibenzoate plasticizer as a substitute for traditional plasticizers known and used in polyurethane formulations currently and in the past. In particular, the invention is directed to use of a low hydroxyl 1,2-propylene glycol dibenzoate (PGDB) as a substitute for phthalate plasticizers, sulfonic ester plasticizers and traditional dibenzoate plasticizers, such as dipropylene glycol dibenzoate (DPGDB), used in polyurethane formulations.

Use of the low hydroxyl, special grade PGDB is critical in reactive polyurethane processes when the plasticizer is blended into the system at the same time (or close to it) that the isocyanate and polyol are mixed together. It is known that the isocyanate (or other ingredients) may preferentially react with the hydroxyl groups of the plasticizer, rather than the polyol, which adversely impacts the resulting physical properties. Hence, the low hydroxyl content, special grade PGDB of the invention may limit the adverse impact on physical properties due to its low hydroxyl content.

The special grade of PGDB provides unexpected improvement in properties of the polyurethane system, including without limitation compatibility, processability, color, exudation, MVTR, hardness, tensile strength, tear strength, modulus, rebound, and compression set.

For purposes of this invention, the following definitions apply:

"Formulation" means the particular components and amounts combined together to form a polyurethane polymer. For purposes of this invention, polyurethane "composition", "system" and "formulation" are used interchangeably.

"TPU" means a thermoplastic polyurethane composition.

"PU" means a polyurethane composition and includes without limitation thermoplastic and thermoset compositions.

"Hydroxyl Number" is generally known in the art as a number expressed in terms of mg KOH/g sample. Hydroxyl numbers are often reported in product specifications. Various methodologies for determining hydroxyl numbers are known in the art. Depending on the methodology used, hydroxyl numbers may be higher or lower than true values. A single product may have different hydroxyl numbers when analyzed using different methodologies. For purposes of the examples, hydroxyl numbers were determined for all plasticizers in the laboratory using the TSI method. As such, hydroxyl numbers may be different from that reported, specified or stated by the manufacturer for comparative samples.

"Traditional plasticizers" means and includes plasticizers used in polyurethane systems in the past, including without limitation phthalates, phosphoric esters, alkyl sulfonic esters of phenol, and benzoates, particularly dipropylene glycol dibenzoate (DPGDB) being the best performer.

The PGDB of the invention is a low hydroxyl dibenzoate having a hydroxyl content lower than that reported for TPU and SG grades used in polyurethane systems currently and in the past. For purposes of the invention, "low hydroxyl number" means a number equal to or less than 2 mg KOH/g when analyzed using the ASTM E222 (titration or acetylation) method, or a number less than 4 mg KOH/g when analyzed using the ASTM E1899 (TSI) method. Preferably, the hydroxyl number of the inventive PGDB has a max of about 2 mg KOH/g, more preferably less than 1.8 mg KOH/g, and most preferably 0.7 mg KOH/g (by the titration method). Hydroxyl numbers of less than about 1 mg KOH/g, including without limitation 0.7 mg KOH/g, as measured by the titration method, are within the scope of the invention.

Hydroxyl number also correlates with half-ester content. It is known that increasing the half-ester content (in the case of dibenzoates, monobenzoate content) increases hydroxyl number. (See e.g., U.S. Patent No. 5,676,742). The inventive PGDB has a half-ester content below 1%, which be equivalent to a hydroxyl number max of about 2 mg KOH/g. The low half-ester content confirms the low hydroxyl values that characterize the inventive PGDB.

By way of comparison, Eastman Chemical Company's Benzoflex^{™} TPU-405 (a special grade benzoate ester plasticizer comprising DPGDB) has a reported OH maximum of 5, while Eastman's Benzoflex^{™} 9-88 SG (another special grade benzoate ester plasticizer comprising DPBDB), Velsiflex^{®} 342S and Ecod's ECOD-FLEX 342S have reported maximum OH limits of 6. As shown in the examples, however, the measured values by the TSI method were much higher for some of these plasticizers than the PGDB of the invention.

The PGDB of the invention also has low acidity (<0.1%) and water content levels (<0.1%, usually <0.07%), to prevent unwanted side-reactions with isocyanates, which is typical of plasticizers used in polyurethane systems.

PGDB may be used in the present invention in amounts ranging from about 5 wt.% to about 80 wt.%, based on the total weight of the polyurethane composition, although as one skilled in the art would understand, amounts of PGDB used will vary depending on application and the desired softness. As used herein, amounts of PGDB utilized may also be expressed as "PHR" values, based upon 100 parts of the polyurethane polymer. By way of example only, plasticizer loadings of 20, 40 and 60 PHR would be equivalent to approximately 17, 29 and 38%, respectively, based on the total weight of the polyurethane composition. One skilled in the art would be able to determine a preferred amount of PGDB for use in specific applications based on the disclosure herein.

The PGDB plasticizer of the invention may be synthesized or bio-sourced. The PGDB plasticizer of the invention may be used in a wide variety of reactive polyurethane systems and applications known to one skilled in the art.

In addition to isocyanate, polyols and plasticizer, other additives may be added to the reactive polyurethane formulations of the invention, including but not limited to chain extending agents, chain terminating agents, stabilizers, flame retardants and the like.

### EXAMPLES

The invention is described in terms of a reactive TPU formulation; however, the invention is not limited as such.

### Initial Screen Protocol

A generic TPU formulation was prepared for testing the various plasticizers as set forth in Table I below. All of the examples utilized the same basic components of the TPU formulation, unless otherwise indicated, although the plasticizer loading varied.

**Table I - Generic TPU Formulation**

| **Material** | **Wt.%** |
|---|---|
| MDI | 21.9 |
| BDO | 5.8 |
| Polyol | 43.7 |
| Plasticizer | 28.6 |
| Stabilizer | 1.0 |

| | |
|---|---|
| MDI = methylene diphenyl isocyanate BDO = 1 ,4-butanediol Polyol = an aliphatic polyester polyol | |

Formulations were evaluated for pot life @ 90°C and 150°C, hardness over time, color (yellowing), tensile strength @ 600% nominal strain, 100% modulus, 300% modulus, compatibility (roll test), tear strength, compression set (22 hr. and 70 hr.), rebound and solvent swell. A number of plasticizers were evaluated as set forth below. For purposes of the examples, the hydroxyl numbers for the dibenzoates were determined in the laboratory prior to testing in samples using the TSI (ASTM E 1899) method.

Comp DB: competitive dibenzoate ester for TPU, also known as Benzoflex^{®} TPU 405 further described below.
ASEP: an alkylsulphonic acid phenylester, commercially available from Lanxess as Mesamoll^{®}
BBP: Butyl benzyl phthalate, historically used in polyurethanes and commercially available from a number of sources
X-9101: A special grade, low hydroxyl PGDB having a hydroxyl number of 0.7 mg KOH/g as measured by the ASTM E 222 and 3 mg KOH/g when measured by the TSI method (ASTM E1899).

X-9702: An experimental dipropylene glycol dibenzoate having a hydroxyl number of 2 mg KOH/g when measured by the ASTM E222 method and 4.7 mg KOH/g when measured by the TSI method.

X-9706: An experimental dipropylene glycol dibenzoate having a OH number of 6 mg KOH/g when measured by the ASTM E222 method and 6.3 mg KOH/g when measured by the TSI method.

X-9735 (or K-FLEX^{®} DP): A dipropylene glycol dibenzoate having a hydroxyl number of about 35 mg KOH/g as measured by the TSI method, commercially available from Emerald Kalama Chemical LLC as K-FLEX^{®} DP.

Benzoflex^{™} TPU 405: A special grade of dipropylene glycol dibenzoate for use in polyurethanes, commercially available from Eastman Chemical Company, having a stated maximum hydroxyl number of 5 mg KOH/g and a tested value of 9.9 mg KOH/g by the TSI method.

Benzoflex^{™} 9-88 SG: A special grade of dipropylene glycol dibenzoate commercially available from Eastman Chemical Company and stated to have use in 2K polyurethane systems and cast polyurethanes, having a stated maximum hydroxyl number of 6 mg KOH/g and a tested value of ~ 5 mg KOH/g by the TSI method. Benzoflex^{™} 9-88: A standard grade of dipropylene glycol dibenzoate commercially available from Eastman Chemical Company, having a stated maximum hydroxyl number of 15 mg KOH/g and a tested value of - 11.5 mg KOH/g by the TSI method.

### Example 1 - Pot-Life

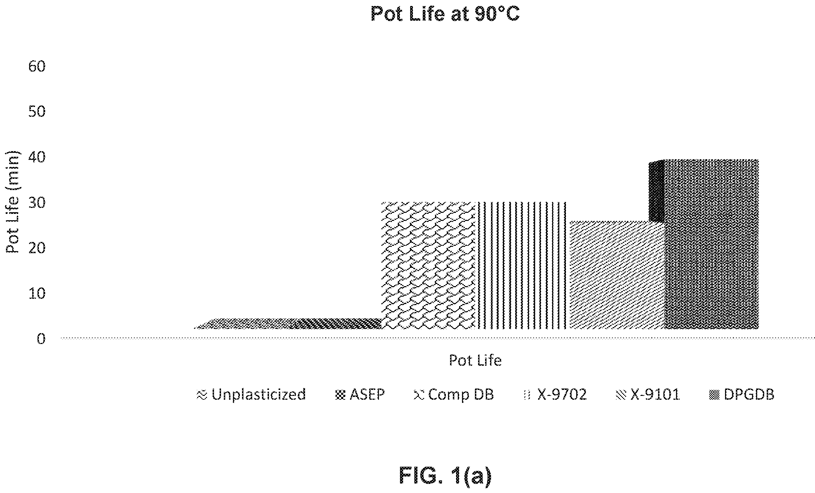

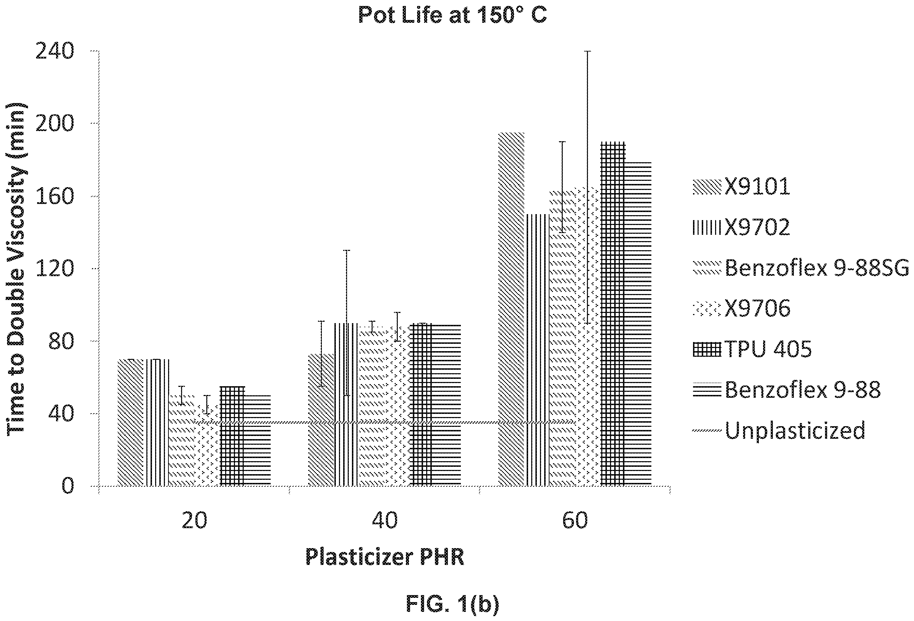

Pot life is defined as the amount of time (min.) it takes for an initial mixed viscosity to double (or quadruple in lower viscosity products (<1 000cPs)). In this example, pot life was determined by the point in which the viscosity doubled in a Gardner tube. Samples were heated to 90°C and observed every 10 minutes to allow for the samples to re-equilibrate. Results at 90°C are shown in FIG. 1(a) for the unplasticized control, ASEP, a competitive dibenzoate (Comp DB), X-9702, X-9101, and DPGDB (also referred to as X-9735). FIG. 1(b) shows results for Pot Life at 150°C for the unplasticized control, X-9101, X-9702, Benzoflex 9-88 SG, X-9706, Benzoflex TPU 405, and Benzoflex 9-88. All of the samples performed comparably to each other. Addition of plasticizer and increasing plasticizer loading increased the pot life, but there were no significant differences were found between plasticizer type or hydroxyl number.

### Example 2 - Hardness

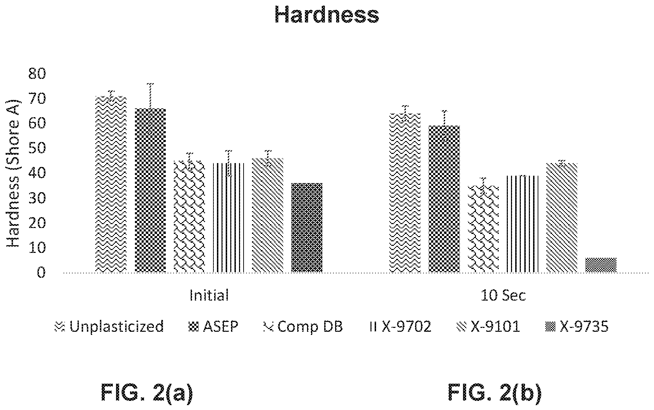

Hardness (ASTM D2240-Shore A) was determined for the unplasticized control, ASEP, a competitive dibenzoate (Comp DB), X-9702, X-9101, and DPGDB (X-9735 or K-FLEX^{®} DP). Of the properly functioning plasticizers, for initial hardness (Shore A), all of the plasticized samples performed comparably. ASEP exhibited significant exudation due to poor compatibility, and this resulted in increased hardness. For 10 second hardness, X-9101 was determined to be harder than the other plasticizers; this reduced softening efficiency combined with excellent compatibility is advantageous in that it allows the formulator to incorporate more plasticizer into their product to achieve desired softness, while offsetting the higher priced TPU components. The high hydroxyl X-9735 plasticizer had low hardness values as compared to the other plasticizers tested, as the high residual hydroxyl content prevented the TPU from fully curing. Results of initial and 10 sec hardness (Shore A) are shown in FIGS. 2(a) and 2(b).

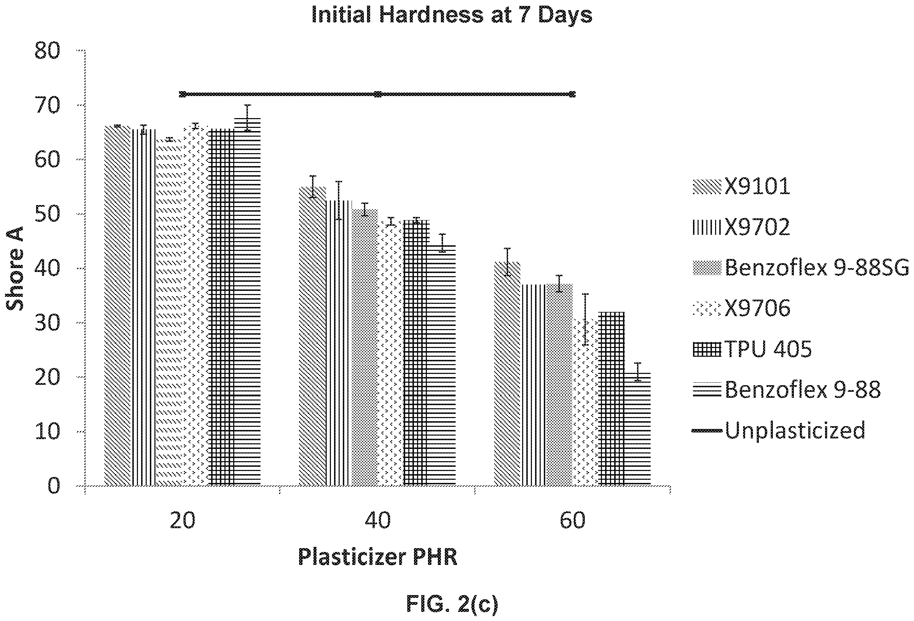

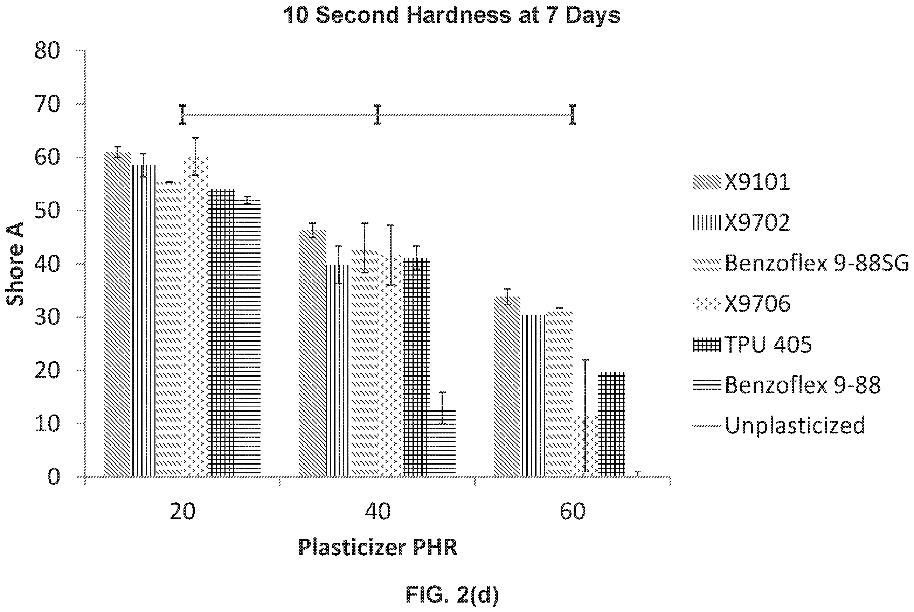

The effects of increasing plasticizer loading (20 PHR, 40 PHR, 60 PHR) on hardness were evaluated. As expected, increasing the plasticizer loading decreases hardness. Initial and 10 sec. hardness at 7 days are shown in FIGS. 2(c) and 2(d) for the unplasticized control, X-9101, X-9702, Benzoflex 9-88 SG, X-9706, Benzoflex TPU 405, and Benzoflex 9-88. Again, X-9101 was determined to have advantageously lower softening efficiency than the other plasticizers. Starting at 40 PHR, the lower hydroxyl number plasticizers resulted in a harder product as compared to plasticizers having higher hydroxyl numbers. For 10 second hardness (at seven days), starting at 20 PHR, the lower hydroxyl number plasticizer X-9101 resulted in a harder product as compared to plasticizers having higher hydroxyl numbers.

### Example 3 - Color-Yellow

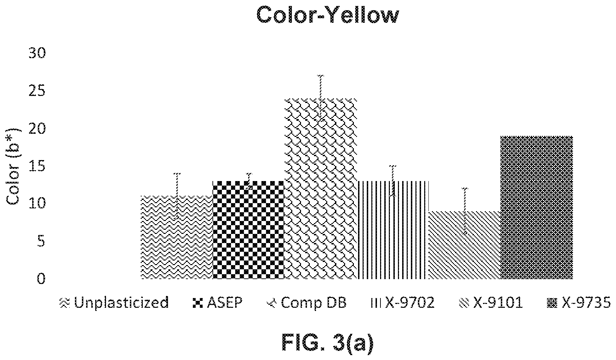

Samples evaluated for post-processing color (yellowing), using Color i7 measuring b* (yellow) at 7 days, included the unplasticized control, ASEP, a competitive dibenzoate (Comp DB), X-9702, X-9101, and DPGDB (X-9735). Lower values (b*) are equivalent to less yellowing. Unexpectedly, X-9101 had the lowest value (b*) of yellowing and was improved even over the unplasticized sample. Other plasticizers were slightly more yellow than the unplasticized sample. The X-9735 sample had increased yellowing, but not as severe as the competitive dibenzoate (Comp DB) sample. Results are shown in FIG. 3 (a).

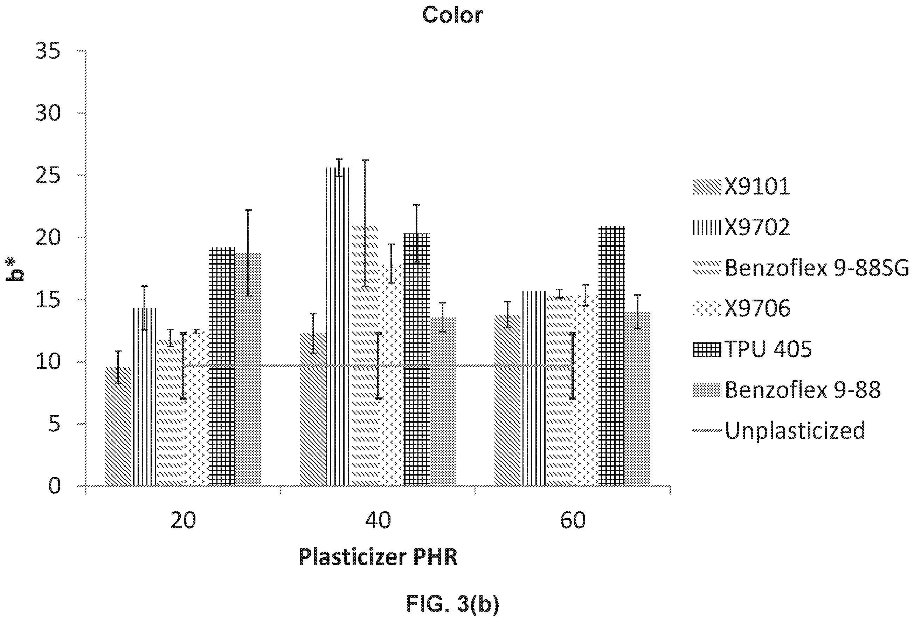

The effect of increasing plasticizer loading on yellowing was evaluated for the unplasticized control, X-9101, X-9702, Benzoflex 9-88 SG, X-9706, Benzoflex TPU 405, and Benzoflex 9-88. Results are shown in FIG. 3(b). Up to about 40 PHR, X-9101 provided no color change as compared to the unplasticized control, while the other plasticizers that were tested showed a greater tendency toward yellowing.

### Example 4 - Tensile Strength -- @ 600% Nominal Strain

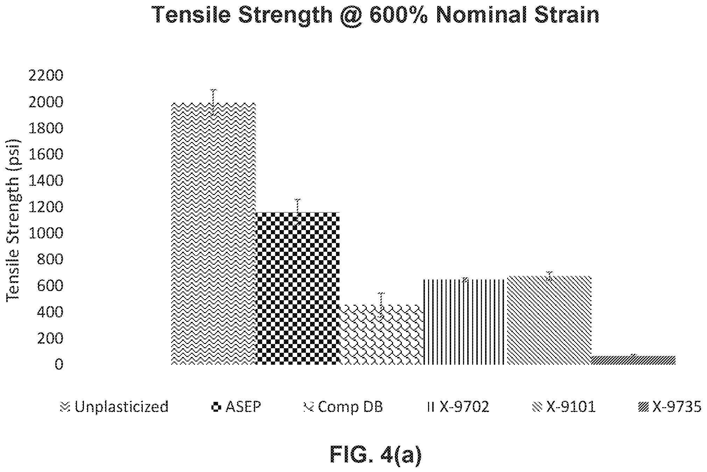

Tensile strength (psi) @ 600% nominal strain, using ASTM D412 methodology, was evaluated for the unplasticized control, ASEP, a competitive dibenzoate (Comp DB), X-9702, X-9101, and DPGDB (X-9735). Specimens were pulled to about 600% elongation. ASEP's increased tensile strength result was due to the high amounts of plasticizer that exuded over the week-long post-cure, which is associated with limited compatibility in this PU system. X-9702 and X-9101 had the highest tensile strength results of the plasticized samples. Results are shown in FIG. 4(a).

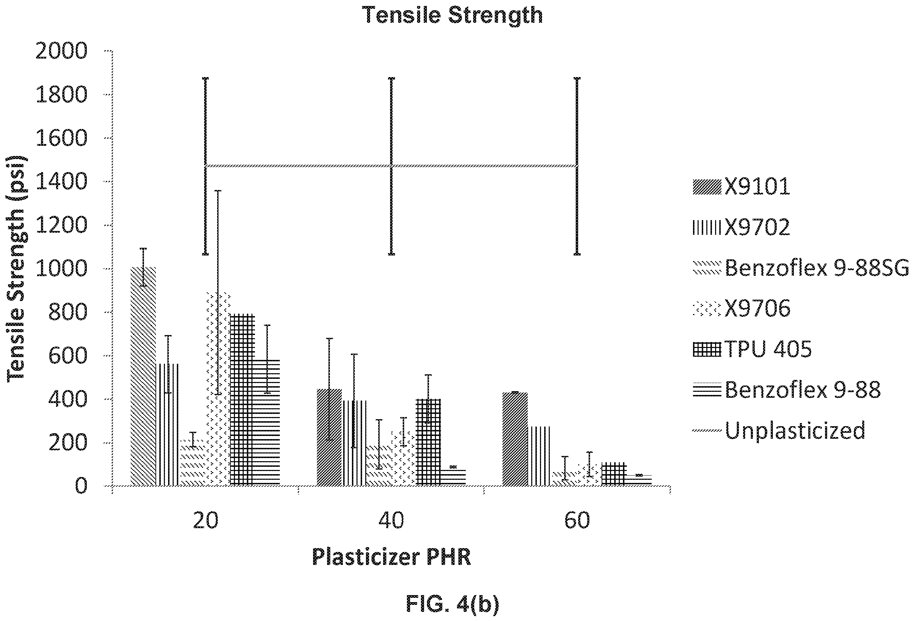

The effects of increasing plasticizer loading on tensile strength were evaluated for the unplasticized control, X-9101, X-9702, Benzoflex 9-88 SG, X-9706, Benzoflex TPU 405, and Benzoflex 9-88. Generally, increasing the loading of plasticizer decreases tensile strength. Even so, the lower hydroxyl number plasticizers resulted in improved tensile strength over the other plasticizers., with the X-9101 demonstrating the greatest tensile strength, even at the high 60 PHR loading. Results are shown in FIG. 4(b).

### Example 5 - 100% and 300% Modulus

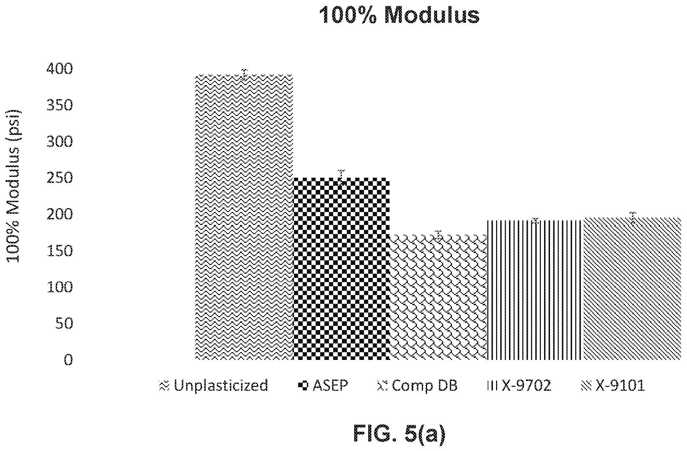

100% Modulus using ASTM D412 methodology, were determined for the unplasticized control, ASEP, a competitive dibenzoate (Comp DB), X-9702, and X-9101. Similar results to the tensile strength (psi) were achieved, with the most efficient plasticizers being in reverse order of strength. Dibenzoates were more efficient in softening overall than ASEP, but again this was due to the loss of ASEP plasticizer due to migration. The competitive DB (Comp DB) was most efficient in softening, while X-9702 and X-9101 were similar but slightly less efficient in softening the samples. This reduced softening efficiency combined with excellent compatibility could provide formulators the ability to incorporate more plasticizer into the formulation to achieve desired softness while offsetting the higher priced TPU components. The X-9735 sample was unable to be tested due to not being fully cured. It is expected that the high OH level of this plasticizer interfered with the desired reaction of the isocyanate and polyol by reacting with the isocyanate. Results are shown in FIG. 5(a).

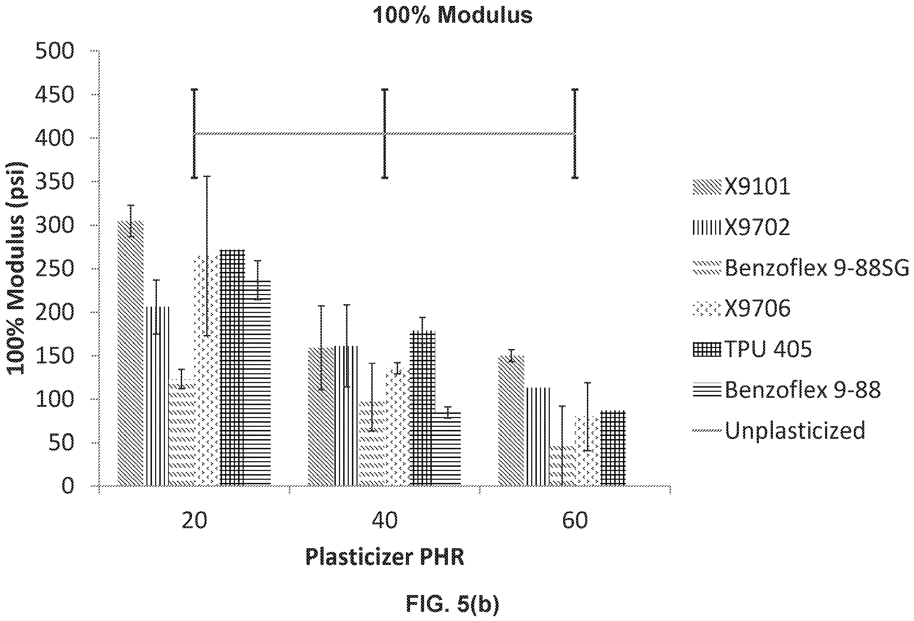

The effects of increasing plasticizer loading on 100% modulus were evaluated for the unplasticized control, X-9101, X-9702, Benzoflex 9-88 SG, X-9706, Benzoflex TPU 405, and Benzoflex 9-88. Generally, increasing the plasticizer loading decreased 100% modulus. Lower hydroxyl number resulted in improved 100% modulus. Interestingly, there was little change in modulus for the X-9101 sample when going from 40 to 60 PHR, indicating that higher loadings could be utilized to offset further raw material costs without over-softening the TPU. Results are shown in FIG. 5(b).

### 300% Modulus

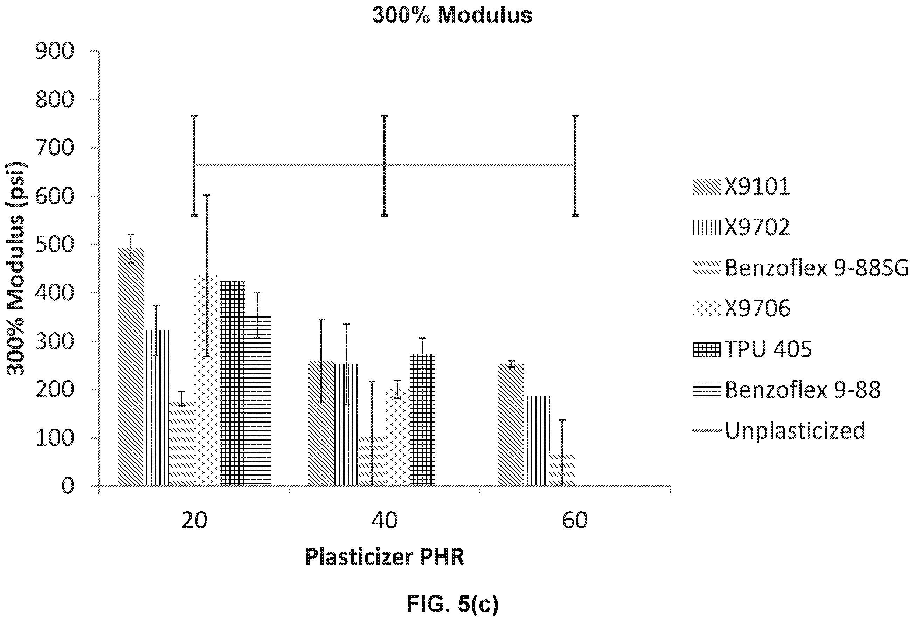

Using ASTM D412 methodology, the effect of increasing the loading of plasticizers on 300% modulus was also evaluated for the unplasticized control, X-9101, X-9702, Benzoflex 9-88 SG, X-9706, Benzoflex TPU 405, and Benzoflex 9-88. Generally, addition of plasticizer decreased 300% modulus. At the 60 PHR loading, only the lowest hydroxyl samples still had any structure, and again the X-9101 samples showed little change in modulus when increasing the plasticizer loading from 40 to 60 PHR. Results are shown in FIG. 5(c).

### Example 6 - Compatibility - Roll Test

Methodology: 3" x ½" specimens of cured TPU were cut out, with three for each sample. Each specimen was rolled tightly in paper and secured using a rubber band. Samples were placed in a 60°C preheated Blue M Oven. Specimens were unrolled and the facing paper was inspected and rated after 24 hours, 48 hours and 72 hours. A new piece of paper was used for each additional day of testing. A rating of 0 indicated no exudation; a rating of 3 indicated heavy exudation.

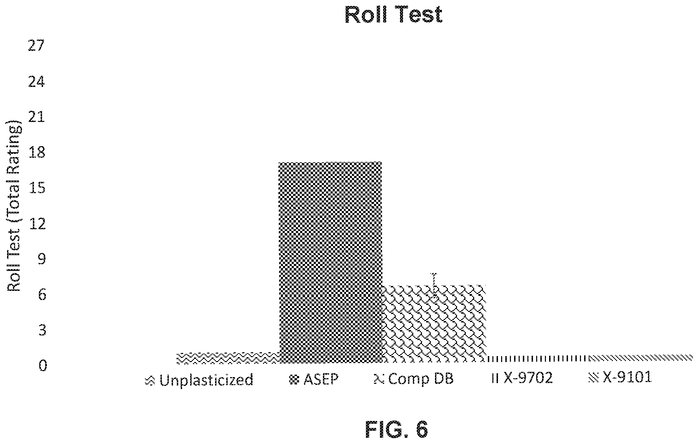

Roll tests for compatibility were performed for the unplasticized control, ASEP, a competitive dibenzoate (Comp DB), X-9702, and X-9101. Since the unplasticized sample should not be exuding anything, a value of 1 or less would be considered to have no exudation (ratings of 1 were attributed to staining from mold release agent). X-9702 and X-9101 had no exudation and are thus very compatible with the formulation. The competitive DB (Comp DB) sample was found to have some exudation, which was unexpected due to its prevalent use in this application. As expected, from visual observations after formulating and conditioning, the ASEP sample exuded a significant amount of plasticizer. Results are shown in FIG. 6.

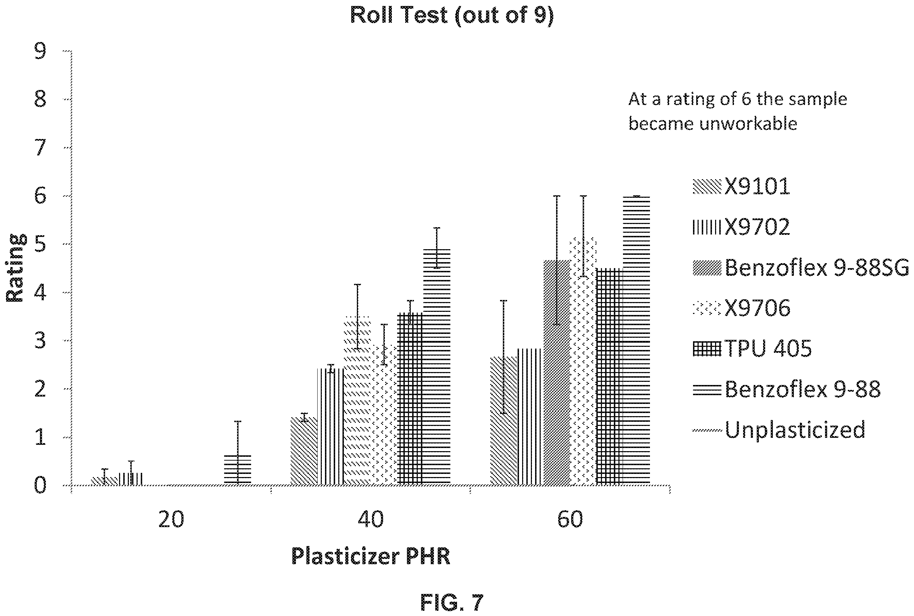

The effects of increasing the plasticizer loading on compatibility was determined using the roll test for the unplasticized control, X-9101, X-9702, Benzoflex 9-88 SG, X-9706, Benzoflex TPU 405, and Benzoflex 9-88. Generally, higher levels of plasticizer result in greater exudation as each plasticizer reached its limit of compatibility. At a rating of 6, samples became unworkable. Even so, the lower hydroxyl number plasticizers resulted in improved compatibility over the other plasticized samples, with both X-9101 and X-9702 demonstrating the least amount of exudation of the plasticizers tested. Results are shown in FIG. 7.

### Example 7 - Rebound

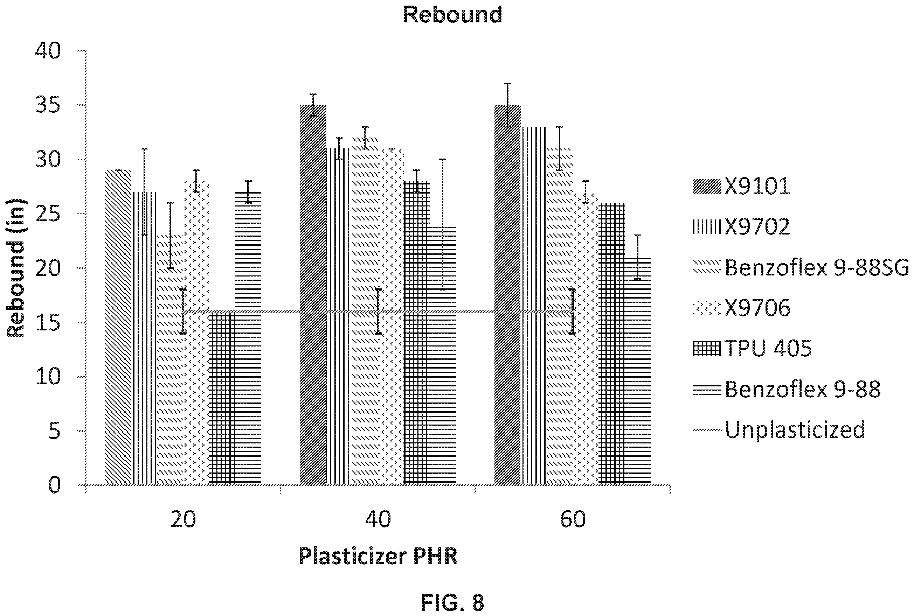

Rebound, using ASTM D2632 methodology. The effect of increasing loading of plasticizers on rebound was also evaluated for the unplasticized control, X-9101, X-9702, Benzoflex 9-88 SG, X-9706, Benzoflex TPU 405, and Benzoflex 9-88. Generally, increasing the plasticizer loading increased the rebound. The lower hydroxyl number plasticizers resulted in a larger rebound over the other plasticized samples, led by the X-9101 sample. Results are shown in FIG. 8.

### Example 8 - Compression Set (22 Hour and 70 Hour)

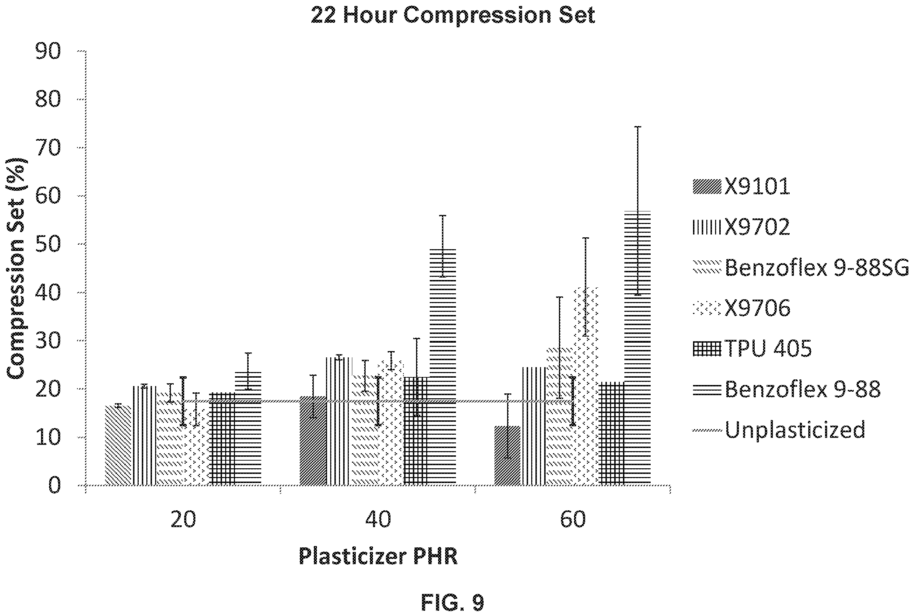

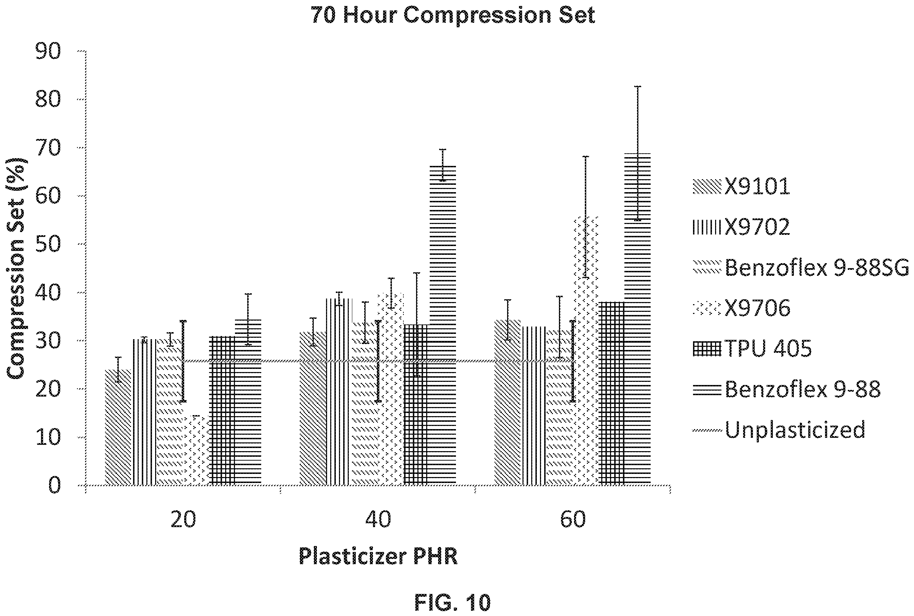

Compression Set - ASTM D395-16, Test Method B. Compression set (22 hr. and 70 hr.) (%) was evaluated for the unplasticized control, X-9101, X-9702, Benzoflex 9-88 SG, X-9706, Benzoflex TPU 405, and Benzoflex 9-88. Generally, addition of plasticizer at higher loading starts to impact compression set. The higher hydroxyl number plasticizers resulted in decreased performance, while the X-9101 samples at 20, 40 and 60 PHR had similar or (for the 22 hour testing time) better compression set versus the unplasticized sample. Results are shown in FIG. 9 for 22 hour compression set and in FIG. 10 for 70 hour compression set.

### Example 9 - Tear Strength

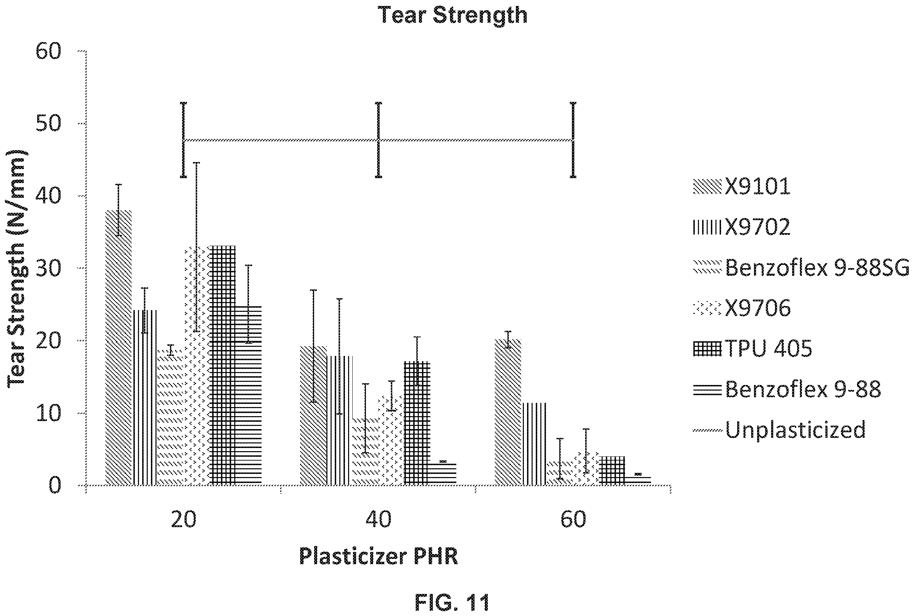

Tear Strength, ASTM D624-00, Type C. Tear strength (N/mm) was evaluated for the unplasticized control, X-9101, X-9702, Benzoflex 9-88 SG, X-9706, Benzoflex TPU 405, and Benzoflex 9-88. Generally, higher levels of plasticizer resulted in decreased tear strength. Even so, the lower hydroxyl number plasticizers resulted in improved tear strength, and X-9101 was notably stronger than the other plasticizers at 60 PHR. Results are shown in FIG.11.

### Example 10 - Solvent-Swell Tests

Solvent Swell Tests ASTM D543-14, Practice A-Immersion Test. Solvent swell testing (%Δ) was performed using a variety of solvents for the unplasticized control, X-9101, X-9702, Benzoflex 9-88 SG, X-9706, Benzoflex TPU 405, and Benzoflex 9-88.

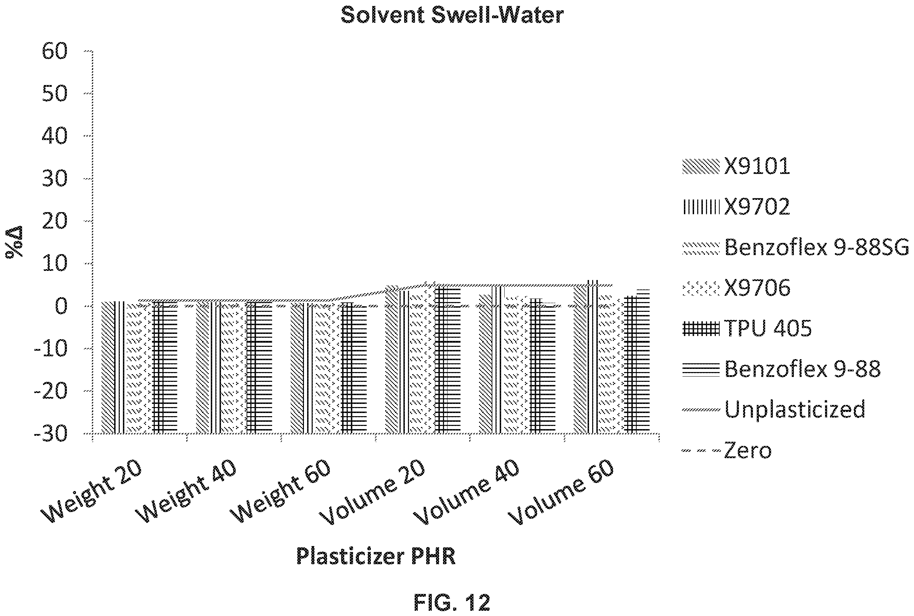

Water: Results are shown in FIG. 12. The addition of plasticizer and increased loading had little to no impact on water solvent swell.

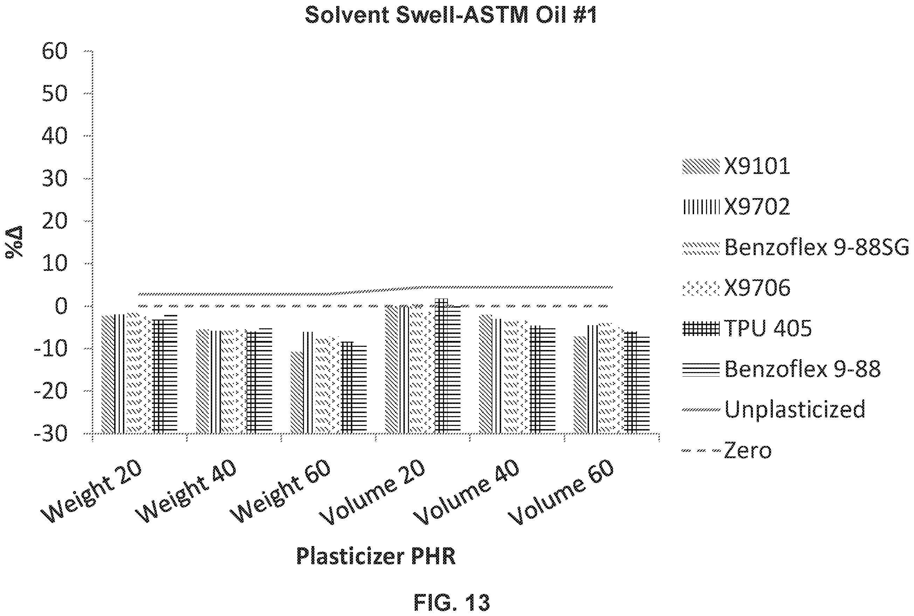

ASTM Oil #1: Results are shown in FIG. 13. The increased plasticizer loading decreased ASTM Oil #1 solvent swell. There was no difference between plasticizer type and hydroxyl number.

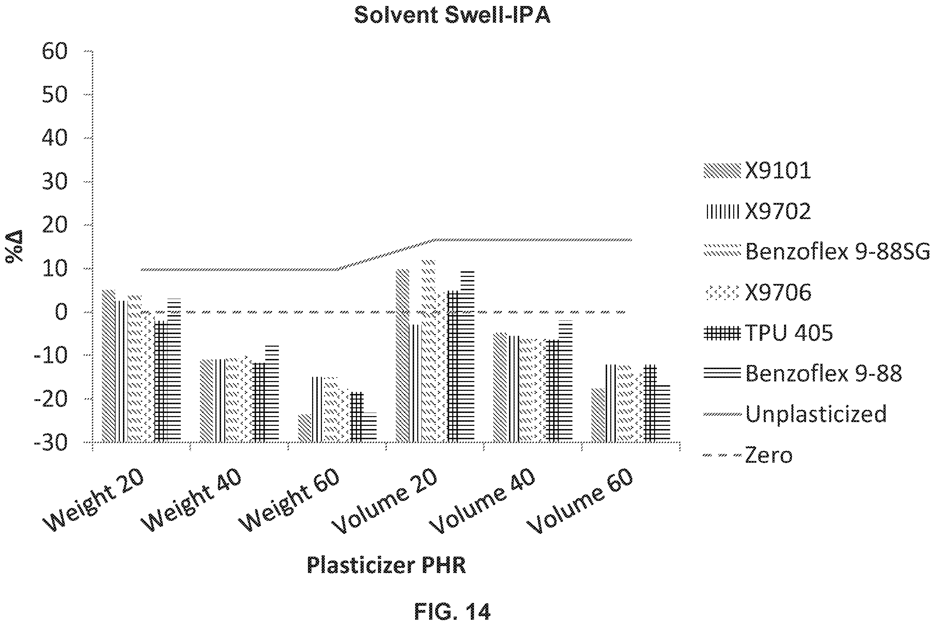

IPA (isopropyl alcohol): Results are shown in FIG. 14. The increased plasticizer loading decreased IPA solvent swell. There was no difference between plasticizer type and hydroxyl number.

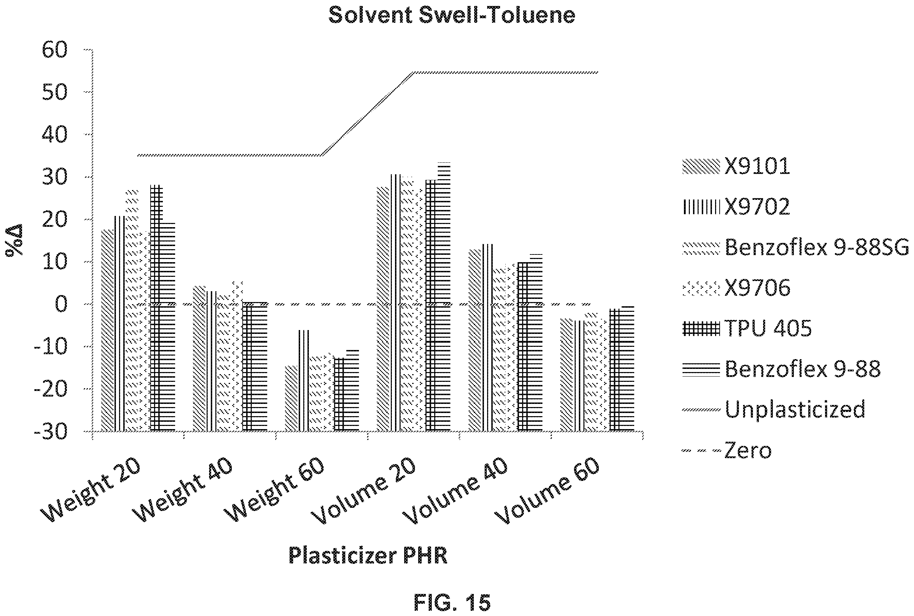

Toluene: Results are shown in FIG. 15. The increased loading decreased toluene solvent swell. There was no difference between plasticizer type and hydroxyl number.

### Example 11 -- Moisture Vapor Transmission Rate (MVTR)

The effects of the use of Mesamoll^{®} (an alkyl sulfonic phenyl ester) and butyl benzyl phthalate (BBP), both general purpose plasticizers, and X-9702 and X-9101 on moisture vapor transmission rate (MVTR, or water vapor transmission (WVT)) in two different polyurethane sealant formulas were evaluated. Table 2 and Table 3, below, show WVT performance data for two polyurethane sealants comprising two different prepolymers, one M280 (Desmoseal M280, supplied by Covestro) and the other 1020 U, a specially prepared prepolymer. Formulas tested are shown below.

### Formula 1 - Polyurethane Sealant using M280 Prepolymer

| **Component** | **Trade Name** | **Weight %** |
|---|---|---|
| Prepolymer | Desmoseal M280 | 27.03 |
| Plasticizer | Mesamoll, X-9702, or X-9101 | 24.32 |
| Adhesion Promotor | Dynasylan Glymo | 0.54 |
| Pigment Paste | Fibadur black | 0.14 |
| Thixotropic agent | Cab-O-Sil TS 720 | 3.94 |
| Extender | Socal U1 S2 | 40.53 |
| Drying Agent | Desmodur VH 20 | 4.32 |
| DBTL Catalyst | Reaxis 218 | 0.03 |

### Prepolymer 1020 U Preparation

| **Lab Prepolymer 1020U** | | |
|---|---|---|
| **Component** | **Trade Name** | **Weight %** |
| Polyether | Acclaim 2200 | 15.14 |
| BDO | 1,4 butanediol | 0.68 |
| Plasticizer | Mesamoll, X-9702 or X-9101 | 5.41 |
| MDI | Lupranate | 5.80 |
| Antioxidant | Irganox 1010 | 0.40 |

### Formula 2 - Polyurethane Sealant Using 1020 U Prepolymer Prepared as Above

| **Formula** | | |
|---|---|---|
| **Component** | **Trade Name** | **Weight %** |
| Prepolymer | 1020U from above | 27.03 |
| Plasticizer | Mesamoll, X-9702 or X-9101 | 24.32 |
| Adhesion Promotor | Dynasylan Glymo | 0.54 |
| Pigment Paste | Fibadur black | 0.14 |
| Thixotropic agent | Cab-O-Sil TS 720 | 3.94 |
| Extender | Socal U1 S2 | 40.53 |
| Drying Agent | Desmodur VH 20 | 4.32 |
| DBTL Catalyst | Reaxis 218 | 0.03 |

Results show the X-9702 and X-9101 had lower MVTR than BBP in 1020U. In M280, X-9702 performed better than X-9101, but both dibenzoates had a higher MVTR as compared to Mesamoll^{®}. Higher MVTR means that more water vapor is able to transmit through the adhesive/coating, which is advantageous for applications where permeable coatings are desired. Overall, results demonstrated that X-9702 and X-9101 were viable alternatives for use in polyurethane systems in applications were moisture transmission is a key consideration.

**Table 2 - Performance Data**

| **[00104] Property** | **1020U/ Mesamoll** | **1020U/ BBP** | **1020U/ X-9702** | **1020U/ X-9101** |
|---|---|---|---|---|
| Water Vapor Transmission Rate (WVT, mg/*m²) | 35 | 72 | 43 | 46 |

| | | | | |
|---|---|---|---|---|
| *1020U is a specially prepared prepolymer as set forth above. | | | | |

**Table 3**

| **Property** | **M280/ Mesamoll** | **M280/ X-9702** | **M280/ X-9101** |
|---|---|---|---|
| Water Vapor Transmission Rate (WVT, mg/h*m²) | 53 | 67 | 78 |

| | | | |
|---|---|---|---|
| *M280 is an aromatic prepolymer based on diphenylmethane diisocyanate useful as a binder in the formulation of a one-component polyurethane sealant and commercially available from Covestro. | | | |

### SUMMARY OF RESULTS

The results above demonstrate that the low hydroxyl PGDB of the invention is a viable, non-phthalate alternative plasticizer for use in polyurethane applications, particularly those that require excellent compatibility, strength and minimal yellowing. The results demonstrate that PGDB is better than current industry standards for TPU grade plasticizers. PGDB is comparable to DPGDB, however, it had unexpected value particularly with regard to compatibility, strength and yellowing. Overall, PGDB is also novel in that, when formulated to equal hardness vs. other traditionally used plasticizers, such as DPGDB, it provides an unexpectedly stronger PU article, despite there being more PGDB (plasticizer) in the system. This stronger PU can also undergo greater elongation and is expected to provide an improvement on abrasion resistance.

PGDB provided stronger polyurethane systems than traditional plasticizers, such as DPGDB, despite being formulated to equal the hardness/softness achieved by traditional plasticizers. PGDB provides yet another dibenzoate plasticizer useful for polyurethane applications that provides better strength, elongation and likely better abrasion resistance when formulated to equal the hardness achieved by DPGDB. The special grade PGDB of the invention performed better than competitive plasticizers stated to have lower hydroxyl materials due to its lower OH and non-exudation as compared to the typical TPU grade DPGDB's and other commercial dibenzoate grades having higher hydroxyl levels.

In general, with a lower OH number, pot life and rebound were improved. Compression set results were neutral. Hardness, tensile strength, and tear strength were improved. X-9101, in particular, demonstrated improved properties of hardness, color, rebound, compression set, compatibility, tensile strength, tear strength and modulus. Neutral properties included pot life and solvent swell.

While not wishing to be bound by any particular theory, it is believed that different process conditions for the production of PGDB vs. DPGDB (e.g., lower temperatures for PGDB vs. higher temperatures for DPGDB) leads to fewer impurities and, hence, different performance properties, including without limitation improved color performance.

While in accordance with the patent statutes, the best mode and preferred embodiment have been set forth, the scope of the invention is not limited thereto, but rather by the scope of the attached claims.

## Claims

1. Use of a low hydroxyl dibenzoate plasticizer in a reactive polyurethane composition prepared from the reaction of an isocyanate and a polyol,
wherein the dibenzoate plasticizer consists of a low hydroxyl 1,2-propylene glycol dibenzoate having a hydroxyl number of less than 2 mg KOH/g when measured by the ASTM E222 method and less than 4 mg KOH/g when measured by the ASTM E1899 method,
wherein the dibenzoate plasticizer is added to the polyurethane composition at the same time or close to the time that the isocyanate and polyol are mixed together to form a polyurethane polymer,
wherein the dibenzoate plasticizer achieves comparable or improved properties of compatibility, color, exudation, optical properties, MVTR, hardness, tensile strength, tear strength, rebound, compression set, and solvent swell, as compared to that achieved with traditional plasticizers known for use in polyurethanes, and
wherein the reactive polyurethane composition is a 1K or 2K sealant, a 1K or 2K adhesive, a thermoplastic composition or a thermoset composition, comprising a polyurethane polymer.

2. Use of a dibenzoate plasticizer as set forth in claim 1, wherein the 1,2-propylene glycol dibenzoate has low acidity of less than 0.1%, water content levels of less than 0.1% and a half-ester content of less than 1%.

3. Use of a dibenzoate plasticizer as set forth in claim 1, wherein the 1,2-propylene glycol dibenzoate has a hydroxyl value of less than 1 mg/KOH/g when measured by the ASTM E222 method.

4. Use of a dibenzoate plasticizer as set forth in claim 1, wherein the 1,2-propylene glycol dibenzoate has a hydroxyl value of 3 or less mg/KOH/g when measured by the ASTM E1899 method.

5. A reactive thermoplastic polyurethane composition, comprising:
a. a thermoplastic polyurethane, and
b. the low hydroxyl dibenzoate plasticizer of any of claims 1, 2, 3 and 4, and wherein the reactive polyurethane composition is a 1K or 2K sealant, a 1K or 2K adhesive, a thermoplastic composition or a thermoset composition, comprising a polyurethane polymer.

6. The reactive thermoplastic polyurethane composition of claim 5, wherein the dibenzoate plasticizer is present in an amount ranging from about 5 wt.% to about 50 wt.%, based upon the weight of the thermoplastic polyurethane composition.

7. A thermoplastic polyurethane composition comprising:
a. an isocyanate;
b. a polyol;
c. a diol;
d. the low hydroxyl dibenzoate plasticizer of claims 1, 2, 3 or 4; and
e. a stabilizer.

8. The thermoplastic polyurethane composition of claim 7, wherein the low hydroxyl dibenzoate plasticizer is present in an amount ranging from about 5 wt.% to about 80 wt.%, based upon the total weight of the thermoplastic polyurethane composition.

9. The thermoplastic polyurethane composition of claim 7,
wherein the isocyanate is a diisocyanate that is methylene diphenyl diisocyanate; and
wherein the diol is butanediol; and
wherein the polyol is a polyester or polyether.

10. An article of manufacture comprising the thermoplastic polyurethane composition of any of claims 5, 6, 7, 8, and 9, wherein the article of manufacture is footwear, handbags, or luggage.

11. A method for reducing or eliminating yellowing associated with the use of traditional plasticizers in polyurethane compositions, comprising the steps of:
a. substituting the low hydroxyl dibenzoate plasticizer of any of claims 1, 2, 3, or 4 for the traditional plasticizer in the polyurethane composition, and
b. incorporating the low hydroxyl dibenzoate plasticizer at the same time or close to the time that the isocyanate and polyol are mixed together to form a polyurethane polymer.

12. A method for improving the properties of articles made from a polyurethane composition, comprising the steps of:
a. substituting the low hydroxyl dibenzoate plasticizer of any of claims 1, 2, 3, or 4 for the traditional plasticizer in the polyurethane composition, and
b. incorporating the low hydroxyl dibenzoate plasticizers at the same time or close to the time that the isocyanate and polyol are mixed together to form a polyurethane polymer.

13. A reactive polyurethane composition, comprising:
a. an isocyanate;
b. a diol;
c. a polyol;
d. a stabilizer; and
e. the low hydroxyl dibenzoate plasticizer of any of claims 1, 2, 3 or 4, present in an amount ranging from 20 phr to 60 phr, based on 100 parts of polyurethane polymer formed by the reaction of the isocyanate and the polyol, wherein components are blended in the polymer formation steps at the same time or very close to the point where the isocyanate and polyol components react to form the polyurethane polymer and not when the polyurethane polymer is fully formed.

14. A reactive polyurethane system, comprising:
a. an isocyanate;
b. a diol;
c. a polyol;
d. a stabilizer; and
e. the low hydroxyl dibenzoate plasticizer of any of claims 1, 2, 3 or 4,
wherein components are blended in the polymer formation steps at the same time or very close to the point where the isocyanate and polyol components react to form the polyurethane polymer and not when the polyurethane polymer is fully formed.

## Patentansprüche

1. Verwendung eines hydroxylgruppenarmen Dibenzoat-Weichmachers in einer durch Reaktion eines Isocyanats und eines Polyols hergestellten reaktiven Polyurethanzusammensetzung,
wobei der Dibenzoat-Weichmacher aus einem hydroxylgruppenarmen 1,2-Propylenglykoldibenzoat mit einer Hydroxylzahl von weniger als 2 mg KOH/g bei Messung nach der ASTM-Methode E222 und weniger als 4 mg KOH/g bei Messung nach der ASTM-Methode E1899 besteht,
wobei der Dibenzoat-Weichmacher zum gleichen Zeitpunkt oder nahe dem Zeitpunkt, an dem das Isocyanat und das Polyol zur Bildung eines Polyurethanpolymers zusammengemischt werden, zu der Polyurethanzusammensetzung gegeben wird,
wobei mit dem Dibenzoat-Weichmacher vergleichbare oder verbesserte Eigenschaften hinsichtlich Kompatibilität, Farbe, Exsudation, optischen Eigenschaften, MVTR, Härte, Zugfestigkeit, Reißfestigkeit, Rückprall, Druckverformungsrest und Lösungsmittelquellung im Vergleich zu den mit herkömmlichen Weichmachern, die für die Verwendung in Polyurethanen bekannt sind, erzielten Eigenschaften erzielt werden und
wobei es sich bei der reaktiven Polyurethanzusammensetzung um einen 1K- oder 2K-Dichtstoff, einen 1K-oder 2K-Klebstoff, eine thermoplastische Zusammensetzung oder eine duroplastische Zusammensetzung, der bzw. die ein Polyurethanpolymer umfasst, handelt.

2. Verwendung eines Dibenzoat-Weichmachers nach Anspruch 1, wobei das 1,2-Propylenglykoldibenzoat eine geringe Acidität von weniger als 0,1 %, Wassergehalte von weniger als 0,1 % und einen Halbestergehalt von weniger als 1 % aufweist.

3. Verwendung eines Dibenzoat-Weichmachers nach Anspruch 1, wobei das 1,2-Propylenglykoldibenzoat eine Hydroxylzahl von weniger als 1 mg KOH/g bei Messung nach der ASTM-Methode E222 aufweist.

4. Verwendung eines Dibenzoat-Weichmachers nach Anspruch 1, wobei das 1,2-Propylenglykoldibenzoat eine Hydroxylzahl von 3 mg KOH/g oder weniger bei Messung nach der ASTM-Methode E1899 aufweist.

5. Reaktive thermoplastische Polyurethanzusammensetzung, umfassend:
a. ein thermoplastisches Polyurethan und
b. den hydroxylgruppenarmen Dibenzoat-Weichmacher nach einem der Ansprüche 1, 2, 3 und 4, und
wobei es sich bei der reaktiven Polyurethanzusammensetzung um einen 1K- oder 2K-Dichtstoff, einen 1K-oder 2K-Klebstoff, eine thermoplastische Zusammensetzung oder eine duroplastische Zusammensetzung, der bzw. die ein Polyurethanpolymer umfasst, handelt.

6. Reaktive thermoplastische Polyurethanzusammensetzung nach Anspruch 5, wobei der Dibenzoat-Weichmacher in einer Menge im Bereich von etwa 5 Gew.-% bis etwa 50 Gew.-%, bezogen auf das Gewicht der thermoplastischen Polyurethanzusammensetzung, vorliegt.

7. Thermoplastische Polyurethanzusammensetzung, umfassend:
a. ein Isocyanat;
b. ein Polyol;
c. ein Diol;
d. den hydroxylgruppenarmen Dibenzoat-Weichmacher nach den Ansprüchen 1, 2, 3 und 4 und
e. einen Stabilisator.

8. Thermoplastische Polyurethanzusammensetzung nach Anspruch 7, wobei der hydroxylgruppenarme Dibenzoat-Weichmacher in einer Menge im Bereich von etwa 5 Gew.-% bis etwa 80 Gew.-%, bezogen auf das Gesamtgewicht der thermoplastischen Polyurethanzusammensetzung, vorliegt.

9. Thermoplastische Polyurethanzusammensetzung nach Anspruch 7,
wobei es sich bei dem Isocyanat um ein Diisocyanat handelt, bei dem es sich um Methylendiphenyldiisocyanat handelt; und
wobei es sich bei dem Diol um Butandiol handelt und
wobei es sich bei dem Polyol um einen Polyester oder Polyether handelt.

10. Erzeugnis, umfassend die thermoplastische Polyurethanzusammensetzung nach einem der Ansprüche 5, 6, 7, 8 und 9, wobei es sich bei dem Erzeugnis um Schuhwerk, Handtaschen oder Gepäck handelt.

11. Verfahren zur Verringerung oder Eliminierung von mit der Verwendung von herkömmlichen Weichmachern in Polyurethanzusammensetzungen assoziierter Vergilbung, das folgende Schritte umfasst:
a. Ersetzen des herkömmlichen Weichmachers in der Polyurethanzusammensetzung durch den hydroxylgruppenarmen Dibenzoat-Weichmacher nach einem der Ansprüche 1, 2, 3 und 4 und
b. Einarbeiten des hydroxylgruppenarmen Dibenzoat-Weichmachers zum gleichen Zeitpunkt oder nahe dem Zeitpunkt, an dem das Isocyanat und das Polyol zur Bildung eines Polyurethanpolymers zusammengemischt werden.

12. Verfahren zur Verbesserung der Eigenschaften von aus einer Polyurethanzusammensetzung hergestellten Artikeln, das folgende Schritte umfasst:
a. Ersetzen des herkömmlichen Weichmachers in der Polyurethanzusammensetzung durch den hydroxylgruppenarmen Dibenzoat-Weichmacher nach einem der Ansprüche 1, 2, 3 und 4 und
b. Einarbeiten des hydroxylgruppenarmen Dibenzoat-Weichmachers zum gleichen Zeitpunkt oder nahe dem Zeitpunkt, an dem das Isocyanat und das Polyol zur Bildung eines Polyurethanpolymers zusammengemischt werden.

13. Reaktive Polyurethanzusammensetzung, umfassend:
a. ein Isocyanat;
b. ein Diol;
c. ein Polyol;
d. einen Stabilisator und
e. den hydroxylgruppenarmen Dibenzoat-Weichmacher nach einem der Ansprüche 1, 2, 3 und 4 in einer Menge im Bereich von 20 phr bis 60 phr, bezogen auf 100 Teile durch die Reaktion des Isocyanats und des Polyols gebildetes Polyurethanpolymer, wobei Komponenten in den Polymerbildungsschritten zum gleichen Zeitpunkt oder sehr nahe dem Zeitpunkt, an dem Diisocyanat- und Polyolkomponenten unter Bildung des Polyurethanpolymers reagieren, und nicht erst nach vollständiger Bildung des Polyurethanpolymers gemischt werden.

14. Reaktives Polyurethansystem, umfassend:
a. ein Isocyanat;
b. ein Diol;
c. ein Polyol;
d. einen Stabilisator und
e. den hydroxylgruppenarmen Dibenzoat-Weichmacher nach einem der Ansprüche 1, 2, 3 und 4,
wobei Komponenten in den Polymerbildungsschritten zum gleichen Zeitpunkt oder sehr nahe dem Zeitpunkt, an dem Diisocyanat- und Polyolkomponenten unter Bildung des Polyurethanpolymers reagieren, und nicht erst nach vollständiger Bildung des Polyurethanpolymers gemischt werden.

## Revendications

1. Utilisation d'un plastifiant dibenzoate à faible indice d'hydroxyle dans une composition de polyuréthane réactive préparée par la réaction d'un isocyanate et d'un polyol,
dans laquelle le plastifiant dibenzoate consiste en un dibenzoate de 1,2-propylène glycol à faible indice d'hydroxyle ayant un indice d'hydroxyle inférieur à 2 mg KOH/g après mesure par la méthode ASTM E222 et inférieur à 4 mg KOH/g après mesure par la méthode ASTM E1899,
dans laquelle le plastifiant dibenzoate est ajouté à la composition de polyuréthane en même temps ou presque en même temps que l'opération de mélange l'un à l'autre de l'isocyanate et du polyol pour former un polymère de polyuréthane,
dans laquelle le plastifiant dibenzoate permet d'obtenir des propriétés comparables ou améliorées de compatibilité, de couleur, d'exsudation, de propriétés optiques, de MVTR, de dureté, de résistance à la traction, de résistance à la déchirure, de rebond, de déformation rémanente après compression et de gonflement dans un solvant, par comparaison avec ce qui est obtenu avec des plastifiants traditionnels connus pour utilisation dans des polyuréthanes, et
dans laquelle la composition de polyuréthane réactive est un produit d'étanchéité 1K ou 2K, un adhésif 1K ou 2K, une composition thermoplastique ou une composition thermodurcissable, comprenant un polymère de polyuréthane.

2. Utilisation d'un plastifiant dibenzoate selon la revendication 1, dans laquelle le dibenzoate de 1,2-propylène glycol a une faible acidité, inférieure à 0,1 %, des teneurs en eau inférieures à 0,1 % et une teneur en semi-esters inférieure à 1 %.

3. Utilisation d'un plastifiant dibenzoate selon la revendication 1, dans laquelle le dibenzoate de 1,2-propylène glycol a un indice d'hydroxyle inférieur à 1 mg/KOH/g après mesure par la méthode ASTM E222.

4. Utilisation d'un plastifiant dibenzoate selon la revendication 1, dans laquelle le dibenzoate de 1,2-propylène glycol a un indice d'hydroxyle de 3 mg/KOH/g ou moins, après mesure par la méthode ASTM E1899.

5. Composition de polyuréthane thermoplastique réactive, comprenant :
a. un polyuréthane thermoplastique, et
b. le plastifiant dibenzoate à faible indice d'hydroxyle selon l'une quelconque des revendications 1, 2, 3 et 4, et la composition de polyuréthane réactive étant un produit d'étanchéité 1K ou 2K, un adhésif 1K ou 2K, une composition thermoplastique ou une composition thermodurcissable, comprenant un polymère de polyuréthane.

6. Composition de polyuréthane thermoplastique réactive selon la revendication 5, dans laquelle le plastifiant dibenzoate est présent en une quantité dans la plage d'environ 5 % en poids à environ 50 % en poids par rapport au poids de la composition de polyuréthane thermoplastique.

7. Composition de polyuréthane thermoplastique comprenant :
a. un isocyanate ;
b. un polyol ;
c. un diol ;
d. le plastifiant dibenzoate à faible indice d'hydroxyle selon les revendications 1, 2, 3 ou 4 ; et
e. un stabilisant.

8. Composition de polyuréthane thermoplastique selon la revendication 7, dans laquelle le plastifiant dibenzoate à faible indice d'hydroxyle est présent en une quantité dans la plage d'environ 5 % en poids à environ 80 % en poids par rapport au poids total de la composition de polyuréthane thermoplastique.

9. Composition de polyuréthane thermoplastique selon la revendication 7,
dans laquelle l'isocyanate est un diisocyanate qui est le diisocyanate de méthylènediphényle ; et
dans laquelle le diol est le butanediol ; et
dans laquelle le polyol est un polyester ou un polyéther.

10. Article de fabrication comprenant la composition de polyuréthane thermoplastique selon l'une quelconque des revendications 5, 6, 7, 8 et 9, l'article de fabrication étant un article chaussant, des sacs à main ou un bagage.

11. Procédé de réduction ou d'élimination du jaunissement associé à l'utilisation de plastifiants traditionnels dans des compositions de polyuréthane, comprenant les étapes consistant :
a. à remplacer le plastifiant traditionnel par le plastifiant dibenzoate à faible indice d'hydroxyle selon l'une quelconque des revendications 1, 2, 3 ou 4 dans la composition de polyuréthane, et
b. à incorporer le plastifiant dibenzoate à faible indice d'hydroxyle en même temps ou presque en même temps que l'opération de mélange l'un à l'autre de l'isocyanate et du polyol pour former un polymère de polyuréthane.

12. Procédé d'amélioration des propriétés d'articles fabriqués à partir d'une composition de polyuréthane, comprenant les étapes consistant :
a. à remplacer le plastifiant traditionnel par le plastifiant dibenzoate à faible indice d'hydroxyle selon l'une quelconque des revendications 1, 2, 3 ou 4 dans la composition de polyuréthane, et
b. à incorporer le plastifiant dibenzoate à faible indice d'hydroxyle en même temps ou presque en même temps que l'opération de mélange l'un à l'autre de l'isocyanate et du polyol pour former un polymère de polyuréthane.

13. Composition de polyuréthane réactive, comprenant :
a. un isocyanate ;
b. un diol ;
c. un polyol ;
d. un stabilisant ; et
e. le plastifiant dibenzoate à faible indice d'hydroxyle selon l'une quelconque des revendications 1, 2, 3 ou 4, présent en une quantité dans la plage de 20 phr à 60 phr pour 100 parties du polymère de polyuréthane formé par la réaction de l'isocyanate et du polyol, les composants étant mélangés dans les étapes de formation du polymère en même temps ou presque en même temps que la réaction des composants isocyanate et polyol pour former le polymère de polyuréthane, et non pas quand le polymère de polyuréthane est entièrement formé.

14. Système de polyuréthane réactif, comprenant :
a. un isocyanate ;
b. un diol ;
c. un polyol ;
d. un stabilisant ; et
e. le plastifiant dibenzoate à faible indice d'hydroxyle selon l'une quelconque des revendications 1, 2, 3 ou 4,
les composants étant mélangés dans les étapes de formation du polymère en même temps ou presque en même temps que la réaction des composants isocyanate et polyol pour former le polymère de polyuréthane et non pas quand le polymère de polyuréthane est entièrement formé.
